# EUROPÄISCHE PATENTSCHRIFT

(11) **EP 3 074 670 B1**
(45) Veröffentlichungstag und Bekanntmachung des Hinweises auf die Patenterteilung: **22.08.2018**
(21) Anmeldenummer: 14824771.1
(22) Anmeldetag: 18.11.2014
(51) Int. Cl.: F16D 3/74, F16J 15/52

(54) **KUPPLUNG MIT BALGGESCHÜTZTER FORMSCHLÜSSIGER MITNAHMEVERBINDUNG**
COUPLING WITH A BELLOWS-PROTECTED INTERLOCKING DRIVING CONNECTION
ACCOUPLEMENT MUNI D'UN ÉLÉMENT DE LIAISON D'ENTRAÎNEMENT À COMPLÉMENTARITÉ DE FORME PROTÉGÉ PAR UN SOUFFLET

(30) Priorität: 27.11.2013 DE 202013010596 U
(43) Veröffentlichungstag der Anmeldung: 05.10.2016
(73) Patentinhaber: KWD Kupplungswerk Dresden GmbH, 01159 Dresden (DE)
(72) Erfinder: NEUGEBAUER, Harald, 01728 Goppeln (DE); HÄHNEL, Thomas, 01723 Wilsdruff (DE)
(74) Vertreter: Rauschenbach, Marion
(86) Internationale Anmeldenummer: PCT/DE2014/000595
(87) Internationale Veröffentlichungsnummer: WO 2015/078429

(56) Entgegenhaltungen:
- WO-A1-95/27151
- DE-U1- 20 115 407
- DE-U1- 29 610 299
- DE-U1-202006 010 830
- DE-U1-202006 019 190
- DE-U1-202013 010 596

## Beschreibung

Die Erfindung betrifft eine Kupplung mit balggeschützter formschlüssiger Mitnahmeverbindung.

Herkömmliche Kupplungen mit balggeschützter formschlüssiger Mitnahmeverbindung z.B. Kupplungen mit balggeschützter Balligverzahnung zum Übertragen von Drehmomenten werden zum Verbinden einer treibenden und einer getriebenen Welle eingesetzt, um die zwischen den beiden Wellen auftretenden achsparallelen, axialen oder winkligen Verlagerungen auszugleichen.

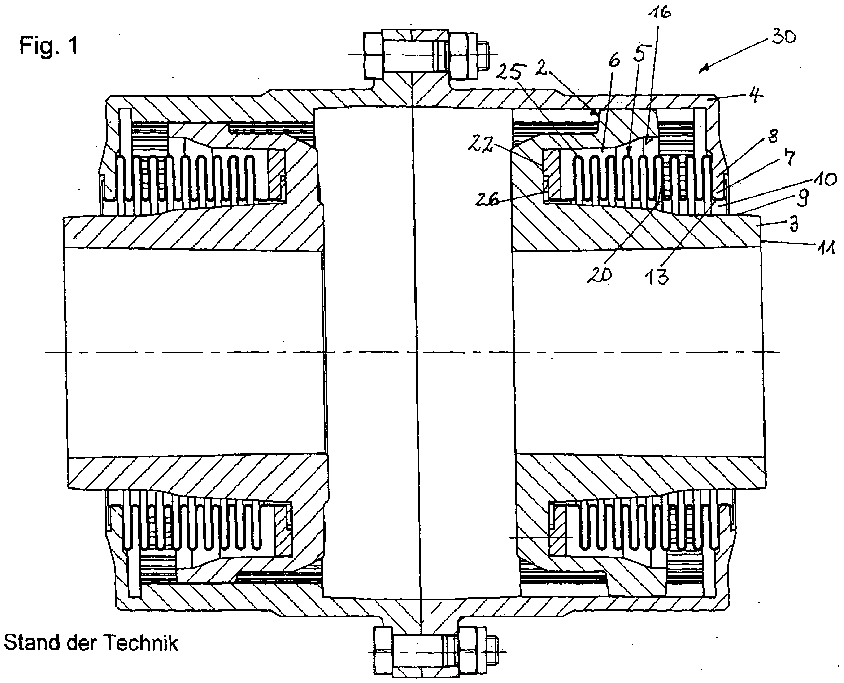

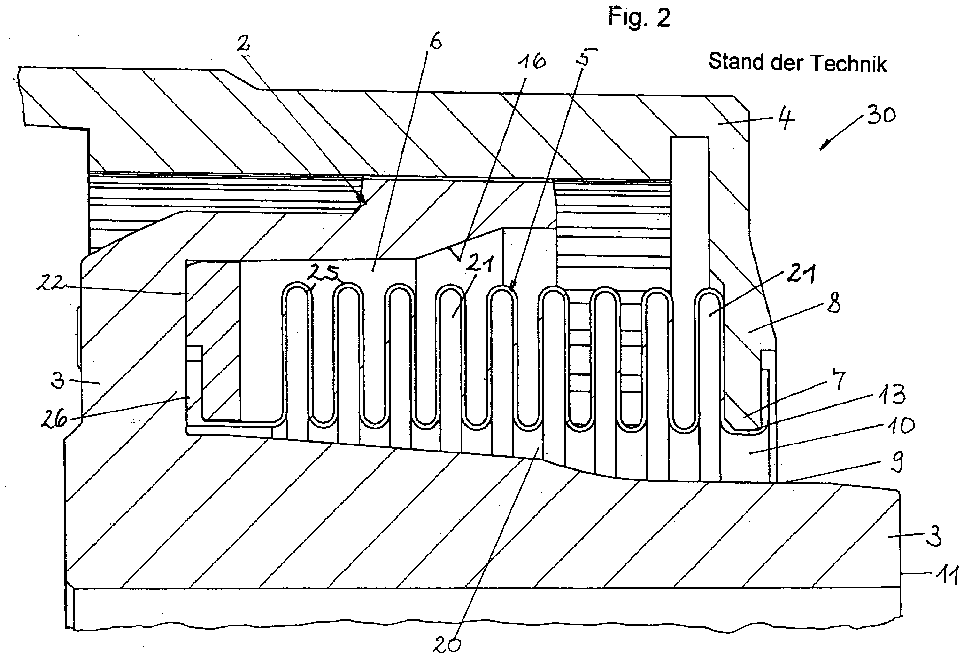

In Fig. 1 wird eine Querschnitt-Darstellung einer herkömmlichen Kupplung mit balggeschützter formschlüssiger Mitnahmeverbindung in Form einer aus zwei Zahnkupplungshälften bestehenden Zahnkupplung 30 mit Balligverzahnung 2 und in Fig. 2 wird eine vergrößerte Querschnitt-Darstellung des Hülsen-Naben-Bereiches der herkömmlichen Zahnkupplung 30 mit Balligverzahnung 2 und der Balligverzahnung 2 zugehörigen Balgabdichtung nach Fig. 1 für Schienenfahrzeuge nach der Druckschrift DE 196 44 884 B4 gezeigt. Die Zahnkupplung 30 umfasst somit zumindest eine Zahnkupplungsnabe 3 und eine die Zahnkupplungsnabe 3 verschließende Hülse 4, wobei zwischen Nabe 3 und Hülse 4 die Verzahnung 2 angeordnet ist, wobei die Verzahnung 2 durch einen ringförmig im Querschnitt gewellt ausgebildeten Balg 5 als Balgabdichtung geschützt ist, wobei der Balg 5 sich in einer Ausnehmung 6 der Nabe 3 in Form eines Hohlraumes befindet und einerseits am Hülsenendbereich 8 und andererseits dem Hülsenendbereich 8 gegenüberliegend an der Nabe 3 an einer Verbindungsstelle 26 befestigt ist,
wobei die ringförmige Ausnehmung 6 im Wesentlichen von einer zur Verzahnung 2 gerichteten ringförmigen Nabeninnenfläche 16 und von einer gegenüberliegenden, zur Stirnseite 11 der Nabe 3 ausgebildeten Nabenaußenfläche 9 begrenzt ist, wobei ein Ringspalt 10 zwischen dem Hülsenendbereich 8 und der Nabenaußenfläche 9 der Ausnehmung 6 einen Balgfreiraum 20 öffnet.

Die vorliegende Erfindung soll somit nicht nur für Zahnkupplungen 30 mit Balligverzahnung 2, sondern auch für Kupplungen mit balggeschützten Verzahnungen 2 und eingebauter der Verzahnung 2 zugeordneten Balgabdichtung verwendbar sein.

Die genannte Ausnehmung 6 der Nabe 3 wird begrenzt von der Nabeninnenfläche 16, der Nabenaußenfläche 9 und einer die Nabeninnenfläche 16 und die Nabenaußenfläche 9 verbindenden Übergangsfläche 22, in deren Bereich der Balg 5 einerseits befestigt ist. Der Balg 5 ist im Hohlraum der Ausnehmung 6 platziert und ist andererseits am Ende 7 des die Ausnehmung 6 fast verschließenden Hülsenendbereiches 8 befestigt. Der ringförmige Balg 5 stellt auch den elastischen Verschluss für die Verzahnung 2 zwischen Nabe 3 und Hülse 4 dar. Zwischen dem Ende 7 des Hülsenendbereiches 8 einschließlich der Balghalterung 13 und der Nabenaußenfläche 9 bildet sich der Ringspalt 10 aus.

Zur Klarstellung wird der gewellte Balg 5 definiert: Der Balg 5 stellt ein Ringelement dar, dessen Oberfläche im Querschnitt wellenförmig ausgebildet ist. In der vorliegenden Erfindung werden die zur Nabenaußenfläche 9 gerichteten Wellentäler des Balges 5 als Balgelementfreiräume 21 bezeichnet. Der zwischen den Balgelementfreiräumen 21 und der Nabenaußenfläche 9 befindliche Teil der Ausnehmung 6 wird im Folgenden als Balgfreiraum 20 bezeichnet.

Ein Nachteil besteht darin, dass sowohl der Balg 5 als auch der Balgfreiraum 20, aber insbesondere die vom Balg 5 ausgebildeten Balgelementfreiräume 21 im Bereich zwischen Balg 5 und der Nabenaußenfläche 9 vor Schmutz- und Staubteilchen nicht geschützt sind. Dabei sind insbesondere die vom Ringspalt 10 ausgehenden Balgelementfreiräume 21 von hinderlichen Schmutz- und Staubteilchenanlagerungen betroffen, wobei die angelagerten Teilchen die Elastizität der Balgelemente 25 und damit die genannten Verlagerungen verringern. Die an den im Querschnitt wellenförmig nebeneinander ausgebildeten Balgelementfreiräumen 21 angelagerten Schmutz- und Staubpartikel beeinträchtigen somit insbesondere die Elastizität der einzelnen wellenförmig ausgebildeten Balgelemente 25, die den Balg 5 ausbilden.

Der Erfindung liegt deshalb die Aufgabe zugrunde, eine Kupplung mit balggeschützter formschlüssiger Mitnahmeverbindung anzugeben, die derart geeignet ausgebildet ist, dass das Eindringen von Staub und Schmutz in den der Mitnahmeverbindung, z.B. der Verzahnung abgewendeten Balgfreiraum, insbesondere in die im Querschnitt als Wellentäler ausgebildeten und der Nabenaußenfläche zugewendeten Balgelementfreiräume der innerhalb der Nabe vorhandenen Ausnehmung im Bereich zwischen Balg und Nabenaußenfläche vermieden werden kann.

Die Aufgabe wird durch die Merkmale des Patentanspruchs 1 gelöst.

Die Kupplung mit balggeschützter formschlüssiger Mitnahmeverbindung, umfasst zumindest eine Nabe und eine Hülse, wobei zwischen Nabe und Hülse die Mitnahmeverbindung angeordnet ist, wobei die Mitnahmeverbindung durch einen Balg geschützt ist, wobei der Balg sich in einer Ausnehmung der Nabe befindet und einerseits am Hülsenendbereich und andererseits dem Hülsenendbereich gegenüberliegend an der Nabe an einer Verbindungsstelle befestigt ist,
wobei die ringförmige Ausnehmung im Wesentlichen von einer zur Mitnahmeverbindung gerichteten ringförmigen Nabeninnenfläche und von einer gegenüberliegenden, zur Stirnseite der Nabe ausgebildeten Nabenaußenfläche begrenzt ist, wobei ein Ringspalt zwischen dem Hülsenendbereich und der Nabenaußenfläche der Ausnehmung vorhanden ist,
wobei gemäß dem Kennzeichenteil des Patentanspruchs 1
zumindest ein elastisches ringförmiges Abdichtelement in dem Bereich zwischen dem gewellten ringförmigen Balg mit Balgelementen und der Nabenaußenfläche angeordnet ist, wobei das Abdichtelement zumindest einen dem Ringspalt benachbarten, im Querschnitt als Wellental ausgebildeten Balgelementfreiraum eines Balgelements abdichtet.

Die formschlüssige Mitnahmeverbindung kann eine Verzahnung darstellen.

Ein erstes erfindungsgemäßes elastisches ringförmiges Abdichtelement kann mit einem speziell geformten Ringaußenbereich und mit einem speziell geformten Ringinnenbereich am Hülsenendbereich unter Einbindung der Balghalterung mittels zweier das Ende des Hülsenendbereiches teilweise umschließenden Ringaußenbereich längliche Ringlippen befestigt sein und kann im Ringinnenbereich eine nach außen gerichtete elastische Dichtlippe haben, die auf der Nabenaußenfläche elastisch und abdichtend aufliegt und durch ihre dichtlippengemäße Auflage auf der Nabenaußenfläche den Ringspalt verschließt.

Das erste elastische Abdichtelement kann sich zumindest in einem, insbesondere im ersten Balgelementfreiraum als Ringaußenbereich befinden, wobei die erste innen gelegene Ringlippe, die dem Balgelementfreiraum eines Balgelements teilweise oder vollständig angepasst ist, und als Ringinnenbereich die zur Stirnseite der Nabe gerichtete elastische Dichtlippe aufweisen kann.

Das erste elastische ringförmige Abdichtelement kann aus einem Elastomer wie PUR-Kunststoff oder Kautschuk bestehen.

Ein zweites erfindungsgemäßes elastisches ringförmiges Abdichtelement kann den Ringspalt schließen, wobei das zweite Abdichtelement zumindest mit seinem Ringaußenbereich in zumindest einen der Balgelementfreiräume des zur Ausnehmung gehörenden Balgfreiraums eingreift, wobei der Ringinnenbereich des zweiten Abdichtelementes in Form eines Dichtrings auf der Nabenaußenfläche der Ausnehmung kontaktierend anliegt.

Das zweite elastische ringförmige Abdichtelement kann zumindest mit seinem Ringaußenbereich in Form einer Ringdichtlippe insbesondere in den ersten dem Hülsenendbereich am nächsten liegenden Balgelementfreiraum des an der Nabe des Hülsenendbereiches liegenden Balgfreiraums eingreifen.

Außerdem kann der Dichtring des zweiten Abdichtelements nicht nur im Querschnitt rechteckig oder quadratisch sein, sondern kann auch als eine elastische zur Stirnseite der Nabe gerichtete geneigte elastische, bei Verlagerungen immer auf der Nabenaußenfläche kontaktierende Dichtlippe ausgebildet sein.

Das zweite elastische ringförmige Abdichtelement kann aus Polyethylen-Schaum bestehen.

Ein drittes erfindungsgemäßes elastisches ringförmiges Abdichtelement kann ebenfalls den Ringspalt schließen, wobei das dritte Abdichtelement den der Nabe gegenüberliegenden Balgfreiraum des Balges in einem Balgelementfreiraum, in mehreren oder in allen Balgelementfreiräumen in Form von Ringdichtlippen ausfüllen und mit seinem Ringinnenbereich auf der Nabenaußenfläche in Form eines vorzugsweise im Querschnitt rechteckigen oder quadratischen Dichtrings kontaktierend aufliegt.

Das dritte elastische ringförmige Abdichtelement kann aus Schaumstoff, insbesondere Polyäthylen-Schaumstoff-Material bestehen.

Ein viertes erfindungsgemäßes elastisches ringförmiges Abdichtelement kann mit miteinander im Ringinnenbereich verbundenen, den Ringaußenbereich darstellenden Ringdichtlippen ausgebildet sein, die die der Nabenaußenfläche gegenüberliegenden, im Querschnitt als Wellentäler ausgebildeten Balgelementfreiräume der Balgelemente in einem Balgelementfreiraum, in mehreren oder in allen Balgelementfreiräumen ausfüllen, wobei das Abdichtelement mit seinem Ringinnenbereich von der Nabenaußenfläche beabstandet ist und wobei die belegten Balgelementfreiräume abgedichtet und damit die Balgelementfreiräume geschützt sind.

Das in die Balgelementfreiräume eingefügte elastische Material der Abdichtelemente kann fest an der Innenfläche der Balgelementfreiräume haften oder kann in die Balgelementfreiräume geklemmt sein.

Das vierte elastische ringförmige Abdichtelement kann aus Schaumstoff, insbesondere Polyäthylen-Schaumstoff bestehen.

Das eingesetzte elastische ringförmige Abdichtelement kann zu einem Kombinationsabdichtelement ausgebildet sein, indem zumindest zwei der obigen Abdichtelemente zusammengefasst sind.

Mit dem erfindungsgemäßen elastischen ringförmigen Abdichtelement werden sowohl der Balg, insbesondere die Balgelementfreiräume vor Schmutz und Staub geschützt.

Weiterbildungen und spezielle Ausgestaltungen der erfindungsgemäßen Kupplung mit balggeschützter formschlüssiger Mitnahmeverbindung sind in weiteren Unteransprüchen angegeben.

Die Erfindung wird mittels mehrerer Ausführungsbeispiele anhand von Zeichnungen näher erläutert.
Es zeigen:
- Fig. 1: eine Querschnitt-Darstellung einer Kupplung mit balggeschützter formschlüssiger Mitnahmeverbindung in Form einer Zahnkupplung mit Verzahnung gemäß dem Stand der Technik,
- Fig. 2: eine vergrößerte Querschnitt-Darstellung des Hülsen-Naben-Bereiches der herkömmlichen Zahnkupplung mit Verzahnung nach dem Stand der Technik gemäß Fig. 1,
- Fig. 3: eine Querschnitt-Darstellung einer erfindungsgemäßen Kupplung mit balggeschützter formschlüssiger Mitnahmeverbindung in Form einer Zahnkupplung mit Verzahnung und einem ersten elastischen ringförmigen Abdichtelement zwischen Balg und dem Balg gegenüberliegender Nabenaußenfläche,
- Fig. 4: eine vergrößerte Darstellung des Hülsen-Naben-Bereiches der erfindungsgemäßen Zahnkupplung mit Verzahnung nach Fig. 3 und dem ersten elastischen ringförmigen Abdichtelement zwischen Balg und dem Balg gegenüberliegender Nabenaußenfläche,
- Fig. 5: eine Querschnitt-Darstellung einer erfindungsgemäßen Zahnkupplung mit Verzahnung und einem zweiten elastischen ringförmigen Abdichtelement zwischen Balg und dem Balg gegenüberliegender Nabenaußenfläche,
- Fig. 6: eine vergrößerte Darstellung des Hülsen-Naben-Bereiches einer erfindungsgemäßen Zahnkupplung mit Verzahnung nach Fig. 5 und dem zweiten elastischen ringförmigen Abdichtelement zwischen Balg und dem Balg gegenüberliegender Nabenaußenfläche,
- Fig. 7: eine Querschnitt-Darstellung einer erfindungsgemäßen Zahnkupplung mit Verzahnung und einem dritten elastischen ringförmigen Abdichtelement zwischen Balg und dem Balg gegenüberliegender Nabenaußenfläche und
- Fig. 8: eine vergrößerte Darstellung des Hülsen-Naben-Bereiches einer erfindungsgemäßen Zahnkupplung mit Verzahnung nach Fig. 7 und dem dritten elastischen ringförmigen Abdichtelement zwischen Balg und dem Balg gegenüberliegender Nabenaußenfläche.
- Fig. 9: eine Querschnitt-Darstellung einer erfindungsgemäßen Zahnkupplung mit Verzahnung und einem vierten elastischen ringförmigen Abdichtelement zwischen Balg und dem Balg gegenüberliegender Nabenaußenfläche, wobei das vierte Abdichtelement die Balgfreiräume vollständig ausfüllt und nicht unmittelbar auf der Nabenaußenfläche aufliegt, sondern von ihr in einem Abstand angeordnet ist, und
- Fig. 10: eine vergrößerte Darstellung des Hülsen-Naben-Bereiches einer erfindungsgemäßen Zahnkupplung mit Verzahnung nach Fig. 9 und dem vierten elastischen ringförmigen Abdichtelement zwischen Balg und dem Balg gegenüberliegender Nabenaußenfläche.

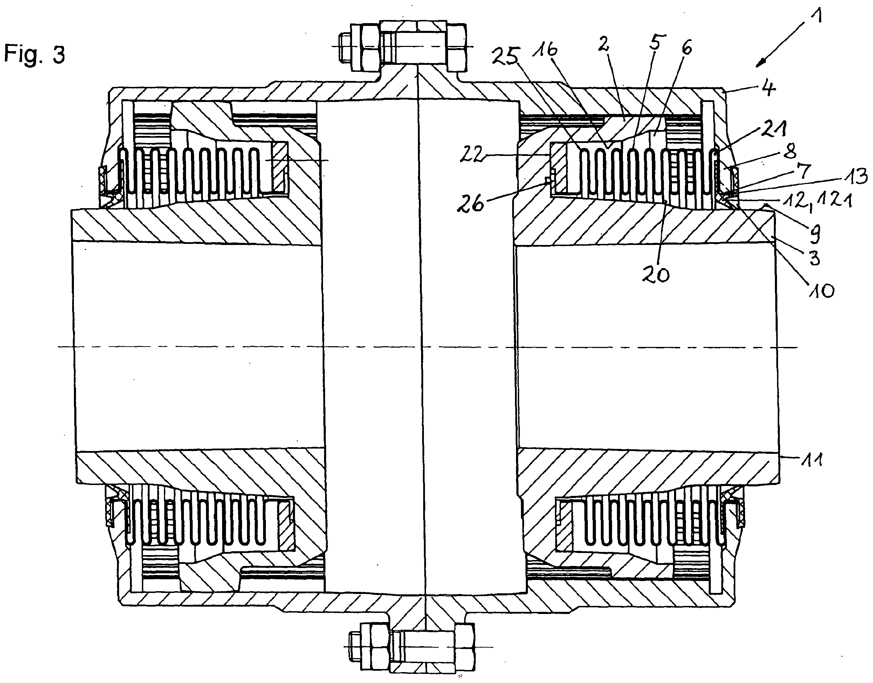

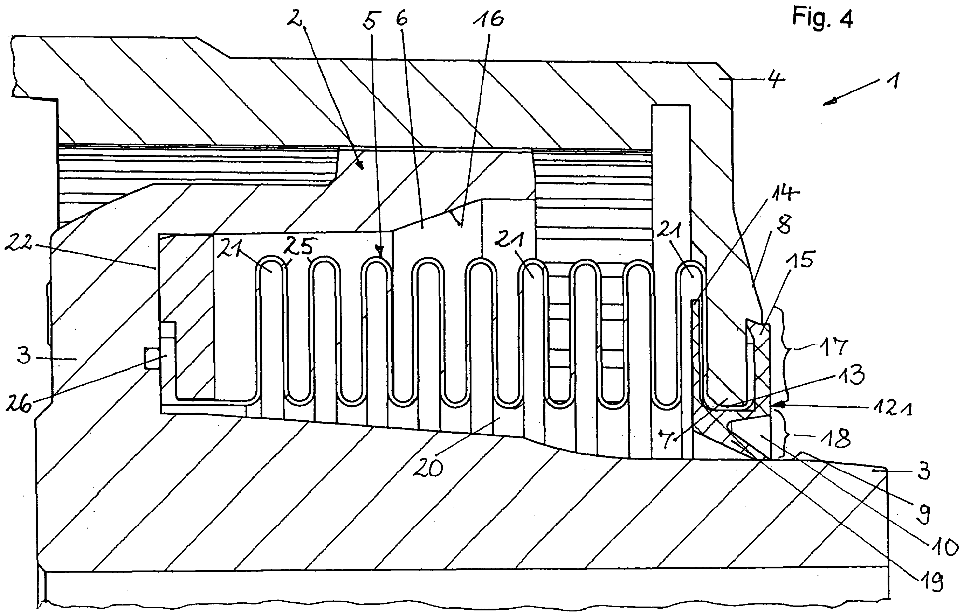

Im Folgenden werden die Fig. 3 und die Fig. 4 betrachtet.
In Fig. 3 ist eine Querschnitt-Darstellung einer erfindungsgemäßen Kupplung mit balggeschützter formschlüssiger Mitnahmeverbindung in Form von mit zwei Zahnkupplungshälften ausgebildeten Zahnkupplung 1 mit jeweils einer Verzahnung 2 und jeweils einem ersten elastischen ringförmigen Abdichtelement 121 zwischen Balg 5 und dem Balg 5 gegenüberliegender Nabenaußenfläche 9 und in Fig. 4 ist eine vergrößerte Darstellung des Hülsen-Naben-Bereiches der erfindungsgemäßen Zahnkupplung 1 mit Verzahnung 2 nach Fig. 3 und dem ersten elastischen ringförmigen Abdichtelement 121 zwischen Balg 5 und dem Balg 5 gegenüberliegender Nabenaußenfläche 9 gezeigt. Dabei wird der Übersicht halber nur eine Zahnkupplungshälfte mit Bezugszeichen belegt.

Die dort dargestellte Zahnkupplung 1 mit Verzahnung 2 umfasst zumindest eine Nabe 3 und eine Hülse 4, wobei zwischen Nabe 3 und Hülse 4 die Verzahnung 2 angeordnet ist, wobei die Verzahnung 2 durch den Balg 5 geschützt ist, wobei der Balg 5 sich in einer Ausnehmung 6 der Nabe 3 befindet und einerseits am Hülsenendbereich 8 und andererseits dem Hülsenendbereich 8 gegenüberliegend an der Nabe 3 an einer Verbindungsstelle 26 befestigt ist,
wobei die ringförmige Ausnehmung 6 im Wesentlichen von einer zur Verzahnung 2 gerichteten ringförmigen Nabeninnenfläche 16 und von einer gegenüberliegenden, zur Stirnseite 11 der Nabe 3 ausgebildeten Nabenaußenfläche 9 begrenzt ist, wobei ein Ringspalt 10 zwischen dem Hülsenendbereich 8 und der Nabenaußenfläche 9 der Ausnehmung 6 vorhanden ist und einen Balgfreiraum 20 öffnet.

Erfindungsgemäß ist ein elastisches ringförmiges Abdichtelement 12, 121 in dem Bereich zwischen dem Balg 5 und der Nabenaußenfläche 9 angeordnet, wobei das Abdichtelement 12, 121 zumindest den dem Ringspalt 10 benachbarten, im Querschnitt als Wellental ausgebildeten Balgelementfreiraum 21 abdichtet.

Ein erstes in Fig. 3 und ein in Fig. 4 vergrößert dargestelltes elastisches ringförmiges Abdichtelement 121 ist derart ausgebildet, dass es zumindest den Ringspalt 10 zwischen Hülsenendbereich 8 und der Nabenaußenfläche 9 der Nabe 3 verschließt.

Die Ausnehmung 6 der Nabe 3 wird begrenzt von der der Verzahnung 2 abgewendeten Nabeninnenfläche 16, einer der Verzahnung 2 zugewendeten Nabenaußenfläche 9 und einer zwischen der Nabeninnenfläche 16 und der Nabenaußenfläche 9 liegenden Übergangsfläche 22 mit einer Verbindungsstelle 26, in deren Bereich der Balg 5 andererseits befestigt ist. Der Balg 5 ist im ringförmigen Hohlraum der Ausnehmung 6 platziert und ist andererseits am Ende 7 des Hülsenendbereiches 8 mittels einer Balghalterung 13 arretiert. Der ringförmige Balg 5 stellt einen schützenden Verschluss für die Verzahnung 2 zwischen Nabe 3 und Hülse 4 dar. Um die axialen und radialen Verlagerungen zu ermöglichen, ist der Ringspalt 10 zwischen dem Ende 7 des Hülsenendbereiches 8 einschließlich der Balghalterung 13 und der Nabenaußenfläche 9 ausgebildet.
Insbesondere sind die Balgelementfreiräume 21 aufnahmeanfällig für Verschmutzungen, die die dynamischen Verlagerungsmöglichkeiten zwischen Nabe 3 und Hülse 4 beeinträchtigen.

In Fig. 4 ist in Bezug auf Fig. 3 in vergrößerter Darstellung deshalb ein erstes elastisches ringförmiges Abdichtelement 121 mit einem speziell geformten Ringaußenbereich 17 und mit einem speziell geformten Ringinnenbereich 18 am Hülsenendbereich 8 unter Einbindung der Balghalterung 13 mittels zweier das Ende 7 des Hülsenendbereiches 8 teilweise umschließenden Ringaußenbereich 17 längliche halternde Ringlippen 14 und 15 befestigt. Es hat im Ringinnenbereich 18 eine nach außen gerichtete elastische Dichtlippe 19, die auf der Nabenaußenfläche 9 elastisch und abdichtend aufliegt und durch ihre dichtlippengemäße Auflage auf der Nabenaußenfläche 9 den Ringspalt 10 verschließt.

Zwischen den beiden länglichen Ringlippen 14 und 15 ist ein Freiraum vorhanden, in den zumindest das Ende 7 des Hülsenendbereiches 8 eingefügt passt.

In einer anderen modifizierten Ausführung (zeichnerisch nicht dargestellt) des ersten Abdichtelements 121 kann zumindest in einem, insbesondere im ersten Balgelementfreiraum 21 die erste innen gelegene Ringlippe 14, ausgebildet als Ringlippe 23 und dem Balgelementfreiraum 21 teilweise oder vollständig angepasst, als Ringaußenbereich 17 sich befinden und als Ringinnenbereich 18 die zur Stirnseite 11 der Nabe 3 gerichtete elastische Dichtlippe 19 ausgebildet sein.

Das erste elastische ringförmige Abdichtelement 121 kann z.B. aus dem elastischen Material PUR-Kunststoff bestehen.

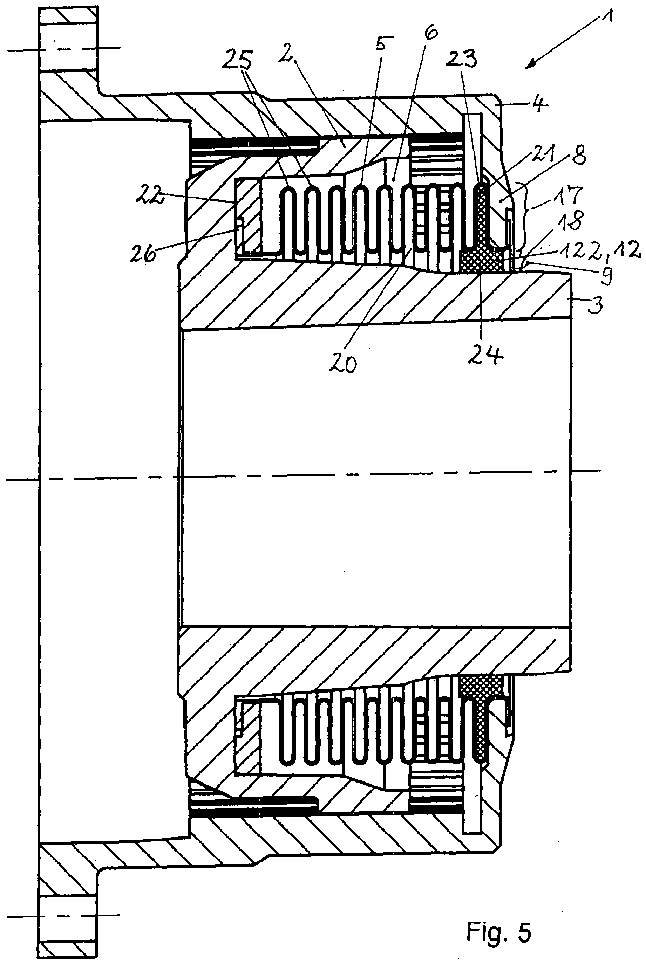

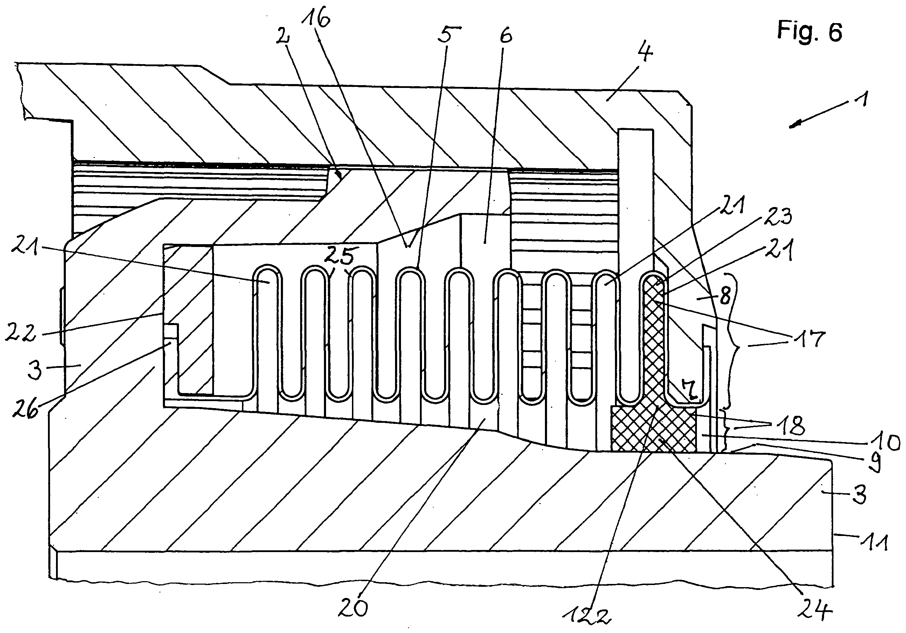

Der Ringinnenbereich 18 kann aber auch anstelle der elastischen Dichtlippe 19 als elastischer, im Querschnitt rechteckförmiger Dichtring 24 ausgebildet sein, der mit der Ringlippe 14 als Ringaußenbereich 17 homogen verbunden ist, wie in Fig. 5 und in Fig. 6 gezeigt ist, so dass das folgend beschriebene zweite elastische Abdichtelement 122 ausgebildet wird.

Im Folgenden werden die Fig. 5 und Fig. 6 gemeinsam betrachtet.
In Fig. 5 ist eine Querschnitt-Darstellung einer erfindungsgemäßen Zahnkupplung 1 mit Verzahnung 2 und einem zweiten elastischen ringförmigen Abdichtelement 122 zwischen Balg 5 und dem Balg 5 gegenüberliegender Nabenaußenfläche 9 und in Fig. 6 eine vergrößerte Darstellung des Hülsen-Naben-Bereiches einer erfindungsgemäßen Zahnkupplung 1 mit Verzahnung 2 und dem zweiten elastischen ringförmigen Abdichtelement 122 zwischen Balg 5 und dem Balg 5 gegenüberliegender Nabenaußenfläche 9 gezeigt.

In Fig. 6 ist das zweite elastische ringförmige Abdichtelement 12, 122 in einer vergrößerten Schnittdarstellung angegeben, das zumindest mit seinem Ringaußenbereich 17 in einen Balgelementfreiraum 21 des in der Nabe 3 des Hülsenendbereiches 8 liegenden Balgfreiraums 20 in Form einer verdickten einen Balgelementfreiraum 21 ausfüllenden Ringlippe 23 eingreift, wobei der Ringinnenbereich 18 des elastischen Abdichtelementes 122 auf der Nabenaußenfläche 9 der Ausnehmung 6 in Form eines gegenüber der Ringlippe 23 verbreiteten Dichtrings 24 kontaktierend anliegt.

Dabei kann das zweite elastische ringförmige Abdichtelement 122 aus dem elastischen Material vorzugsweise aus Polyäthylen(PE)-Schaumstoff bestehen.

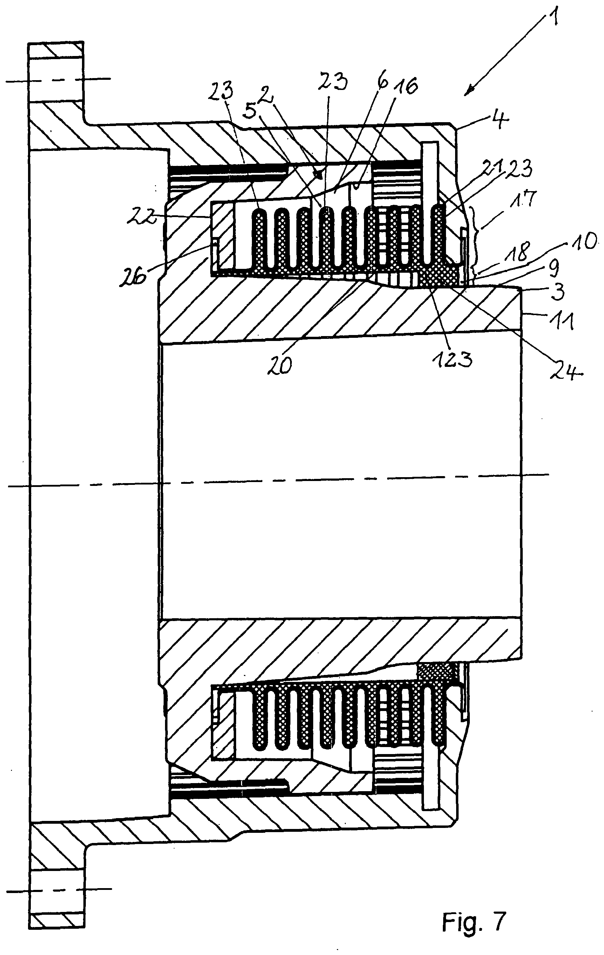

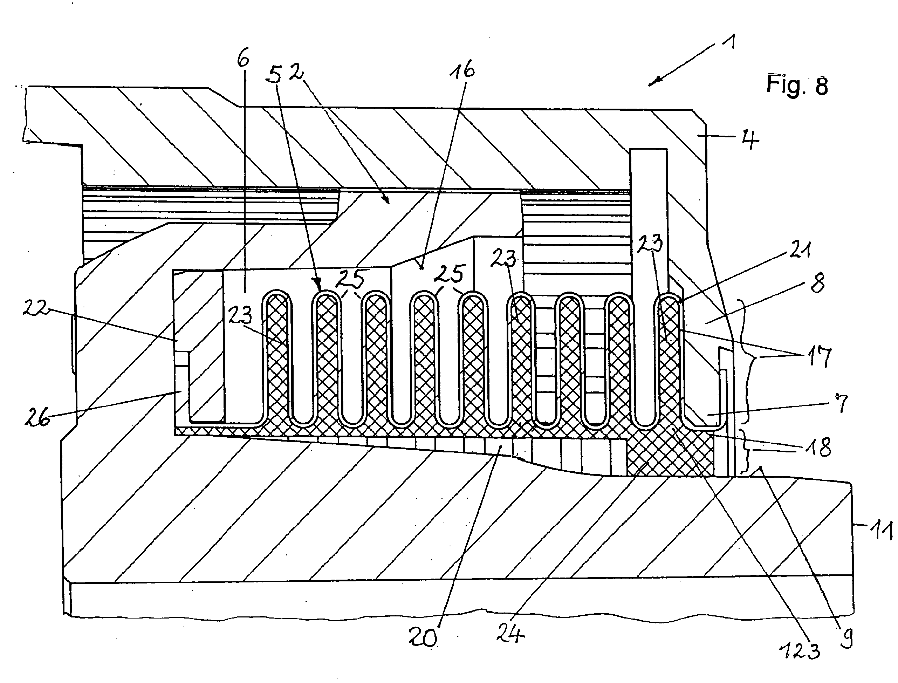

Im Folgenden werden die Fig. 7 und die Fig. 8 gemeinsam betrachtet.

In Fig. 7 ist eine Querschnitt-Darstellung einer erfindungsgemäßen Zahnkupplung 1 mit Verzahnung 2 und einem dritten elastischen ringförmigen Abdichtelement 123 zwischen Balg 5 und dem Balg 5 gegenüberliegender Nabenaußenfläche 9 und in Fig. 8 ist eine vergrößerte Darstellung des Hülsen-Naben-Bereiches der erfindungsgemäßen Zahnkupplung 1 mit Verzahnung 2 und dem dritten elastischen ringförmigen Abdichtelement 123 zwischen Balg 5 und dem Balg 5 gegenüberliegender Nabenaußenfläche 9 gezeigt.

In Fig. 7 und in Fig. 8 ist das dritte elastische ringförmige Abdichtelement 12, 123 gezeigt, das den der Nabe 3 gegenüberliegenden Balgfreiraum 20 des Balges 5 zumindest in mindestens einem Balgelementfreiraum 21, in mehreren oder auch in allen Balgelementfreiräumen 21 in Form von Ringdichtlippen 23 ausfüllt und das mit seinem Ringinnenbereich 18 auf der Nabenaußenfläche 9 abdichtend aufliegt.

Die in die Balgelementfreiräume 21 gegebenenfalls eingeschäumten, eingreifenden Ringdichtlippen 23 können ringinnenbereichsseitig miteinander verbunden sein. Der dem Ringinnenbereich 18 zugeordnete Dichtring 24 stützt die vorhandenen und miteinander verbundenen Ringdichtlippen 23 von der Nabenfläche 9 ab. Der Dichtring 24 kann deshalb von den in die Balgelementfreiräume 21 eingeschäumten und eingreifenden Ringdichtlippen 23 abgesetzt ausgebildet sein. Alternativ können die hergestellten PE-Schaum-Ringdichtlippen 23 in die Balgelementfreiräume 21 eingesteckt und somit vorgespannt sein.

Dabei kann das dritte elastische ringförmige Abdichtelement 123 aus dem elastischen Material Polyethylen(PE)-Schaumstoff bestehen.

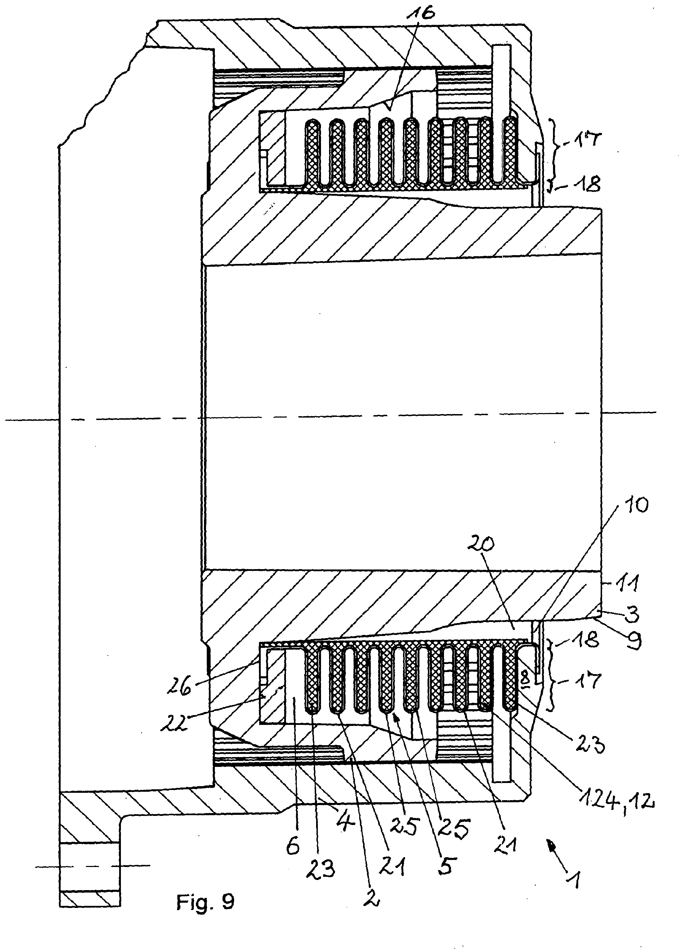

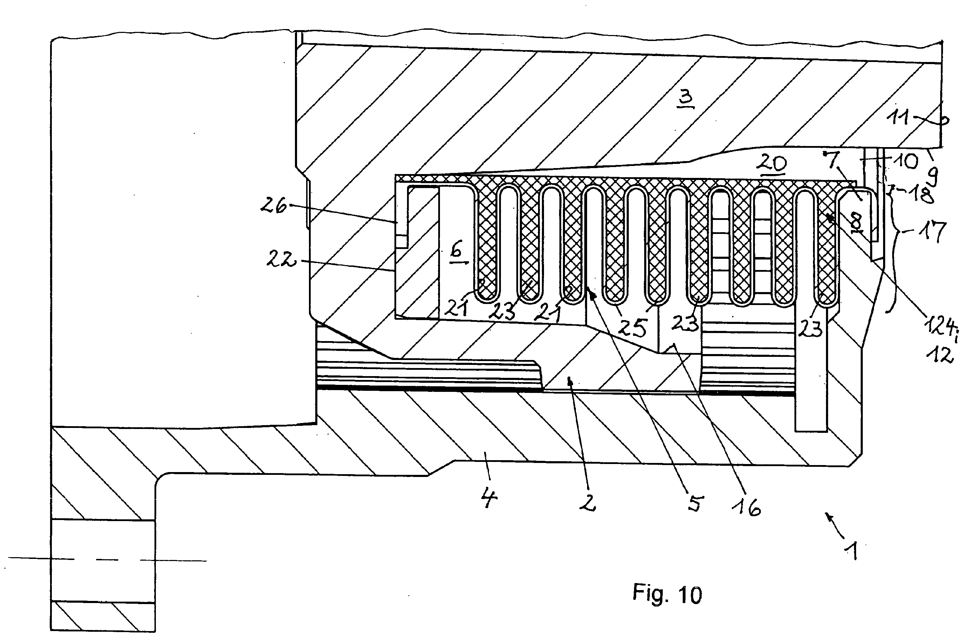

Im Folgenden werden die Fig. 9 und die Fig. 10 gemeinsam betrachtet.
In Fig. 9 ist eine Querschnitt-Darstellung einer erfindungsgemäßen Zahnkupplung 1 mit Verzahnung 2 und einem vierten elastischen ringförmigen Abdichtelement 124 zwischen Balg 5 und dem Balg 5 gegenüberliegender Nabenaußenfläche 9, wobei das vierte Abdichtelement 124 die Balgelementfreiräume 21 vollständig ausfüllt und nicht unmittelbar auf der Nabenaußenfläche 9 aufliegt, und in Fig. 10 eine vergrößerte Darstellung des Hülsen-Naben-Bereiches einer erfindungsgemäßen Zahnkupplung 1 mit Verzahnung 2 nach Fig. 9 und dem vierten elastischen ringförmigen Abdichtelement 124 zwischen Balg 5 und dem Balg 5 gegenüberliegender Nabenaußenfläche 9 gezeigt.

Das vierte elastische ringförmige Abdichtelement 12, 124 ist mit miteinander im Ringinnenbereich 18 verbundenen, den Ringaußenbereich 17 darstellenden Ringdichtlippen 23 ausgebildet, die die der Nabenaußenfläche 9 gegenüberliegenden Balgelementfreiräume 21 der Balgelemente 25 vorzugsweise in allen Balgelementfreiräumen 21 ausfüllen, wobei das Abdichtelement 124 mit seinem Ringinnenbereich 18 von der Nabenaußenfläche 9 in einem Abstand angeordnet ist und wobei die belegten Balgelementfreiräume 21 abgedichtet und damit die Balgelementfreiräume 21 geschützt sind. Der zur Ausnehmung 6 gehörende Balgfreiraum 20 ist somit weitgehend ein Freiraum ohne Material.

Das vierte Abdichtelement 124 unterscheidet sich im Wesentlichen von dem dritten Abdichtelement 123 durch Fehlen des auf die Nabenaußenfläche 9 aufsetzenden Dichtrings 24 oder einer kontaktierenden Dichtlippe 19.

Dabei kann das vierte elastische ringförmige Abdichtelement 123 ebenfalls aus dem elastischen Material Polyeäthylen(PE)-Schaumstoff bestehen.

Mit dem elastischen ringförmigen Abdichtelement 12 und seinen angegebenen Varianten 121, 122, 123, 124 werden sowohl der Balg 5 insbesondere die Balgelementfreiräume 21 sowie auch weitgehend die Nabenaußenfläche 9 und auch die Verbindungsstelle 26 zwischen Nabe 3 und Balg 5 an der Übergangsstelle 22 sicher vor Schmutz und Staub geschützt. Das elastische ringförmige Abdichtelement 12 stellt im Wesentlichen ein Balgschutzelement dar.

Die Abdichtelemente 12; 121, 122, 123, 124 können so ausgebildet und hergestellt sein, dass Ringaußenbereich 17 und Ringinnenbereich 18 nicht voneinander getrennte Teile sind, sondern Teile eines einstückig hergestellten Abdichtelements 12; 121, 122, 123, 124 darstellen.

Andererseits können die Abdichtelemente 12; 121, 122, 123, 124 auch derart ausgebildet und hergestellt sein, dass Ringaußenbereich 17 und Ringinnenbereich 18 voneinander getrennt hergestellte Bereichsteile sind bzw. Ringaußenbereich 17 und auch Ringinnenbereich 18 zumindest aus mindestens zwei Bereichsteilen bestehen, die zu einem der Abdichtelemente 12; 121, 122, 123, 124 miteinander zusammengefügt und vorzugsweise verklebt sind.

Das elastische ringförmige Abdichtelement 12 kann zu einem Kombinationsabdichtelement ausgebildet sein, indem zumindest zwei Kombinationen der vordem genannten elastischen Abdichtelemente 121, 122, 123, 124 zusammengefasst sind.

### Bezugszeichenliste

- 1: Kupplung mit balggeschützter formschlüssiger Mitnahmeverbindung/Zahnkupplung
- 2: Mitnahmeverbindung/Verzahnung
- 3: Nabe
- 4: Hülse
- 5: Balg
- 6: Ausnehmung
- 7: Ende
- 8: Hülsenendbereich
- 9: ringförmige Nabenaußenfläche
- 10: Ringspalt
- 11: Stirnseite der Nabe
- 12: elastisches ringförmiges Abdichtelement
- 121: erstes elastisches ringförmiges Abdichtelement
- 122: zweites elastisches ringförmiges Abdichtelement
- 123: drittes elastisches ringförmiges Abdichtelement
- 124: viertes elastisches ringförmiges Abdichtelement
- 13: Balghalterung
- 14: erste Ringlippe
- 15: zweite Ringlippe
- 16: ringförmige Nabeninnenfläche
- 17: Ringaußenbereich
- 18: Ringinnenbereich
- 19: Dichtlippe
- 20: großer Balgfreiraum
- 21: Balgelementfreiraum/-räume
- 22: Übergangsfläche
- 23: Ringdichtlippe
- 24: Dichtring
- 25: Balgelement
- 26: Verbindungsstelle
- 30: Zahnkupplung mit Verzahnung nachdem Stand der Technik

## Patentansprüche

1. Kupplung (1) mit balggeschützter formschlüssiger Mitnahmeverbindung (2), zumindest umfassend eine Nabe (3) und eine Hülse (4),
wobei zwischen Nabe (3) und Hülse (4) die Mitnahmeverbindung (2) angeordnet ist, wobei die Mitnahmeverbindung (2) durch einen Balg (5) geschützt ist, wobei der Balg (5) sich in einer Ausnehmung (6) der Nabe (3) befindet und einerseits am Hülsenendbereich (8) und andererseits dem Hülsenendbereich (8) gegenüberliegend an der Nabe (3) befestigt ist,
wobei die ringförmige Ausnehmung (6) zumindest von einer zur Mitnahmeverbindung (2) gerichteten ringförmigen Nabeninnenfläche (16) und von einer gegenüberliegenden, zur Stirnseite (11) der Nabe (3) ausgebildeten Nabenaußenfläche (9) begrenzt ist, wobei ein Ringspalt (10) zwischen dem Hülsenendbereich (8) und der Nabenaußenfläche (9) der Ausnehmung (6) vorhanden ist,
**dadurch gekennzeichnet,**
**dass** zumindest ein elastisches ringförmiges Abdichtelement (12; 121, 122, 123, 124) in dem Bereich zwischen dem gewellt ausgebildeten ringförmigen Balg (5) mit Balgelementen (25) und der Nabenaußenfläche (9) angeordnet ist, wobei das Abdichtelement (12) zumindest einen dem Ringspalt (10) benachbarten, im Querschnitt als Wellental ausgebildeten Balgelementfreiraum (21) eines Balgelements (25) abdichtet.

2. Kupplung nach Anspruch 1,
**dadurch gekennzeichnet,**
**dass** die Kupplung (1) mit balggeschützter formschlüssiger Mitnahmeverbindung (2) eine Zahnkupplung mit mindestens einer balligen Verzahnung mit Balgabdichtung darstellt.

3. Kupplung nach Anspruch 1,
**dadurch gekennzeichnet,**
**dass** ein erstes elastisches ringförmiges Abdichtelement (12; 121) mit einem angepasst geformten Ringaußenbereich (17) und mit einem angepasst geformten Ringinnenbereich (18) am Hülsenendbereich (8) unter Einbindung der Balghalterung (13) mittels zweier das Ende (7) des Hülsenendbereiches (8) teilweise umschließenden Ringaußenbereich (17) länglicher Ringlippen (14, 15) befestigt ist und im Ringinnenbereich (18) eine nach außen gerichtete und geneigte elastische Dichtlippe (19) hat, die auf der Nabenaußenfläche (9) elastisch und abdichtend aufliegt und durch ihre dichtlippengemäße Auflage auf der Nabenaußenfläche (9) den Ringspalt (10) verschließt.

4. Kupplung nach Anspruch 3,
**dadurch gekennzeichnet,**
**dass** das erste elastische Abdichtelement (12; 121) sich zumindest in einem, insbesondere im ersten Balgelementfreiraum (21) als Ringaußenbereich (17) befindet, wobei die erste innen gelegene Ringlippe (14), ausgebildet als Ringlippe (23), die dem Balgelementfreiraum (21) eines Balgelements (25) teilweise oder vollständig angepasst ist, und als Ringinnenbereich (18) die zur Stirnseite (11) der Nabe (3) gerichtete elastische Dichtlippe (19) aufweist.

5. Kupplung nach den Ansprüchen 3 und 4,
**dadurch gekennzeichnet,**
**dass** das erste elastische ringförmige Abdichtelement (12; 121) aus elastischem Material in Form eines Elastomers wie PUR-Kunststoff oder Kautschuk besteht.

6. Kupplung nach Anspruch 1,
**dadurch gekennzeichnet,**
**dass** ein zweites elastisches ringförmiges Abdichtelement (12; 122) den Ringspalt (10) schließt, das zumindest mit seinem Ringaußenbereich (17) in zumindest einen der Balgelementfreiräume (21) des in der Nabe (3) des Hülsenendbereiches (8) liegenden Balgfreiraums (20) eingreift, wobei der Ringinnenbereich (18) des Abdichtelementes (12; 122) in Form eines elastischen Dichtrings (24) oder in Form einer elastischen Dichtlippe (19) auf der Nabenaußenfläche (9) der Ausnehmung (6) kontaktierend anliegt.

7. Kupplung nach Anspruch 6,
**dadurch gekennzeichnet,**
**dass** das zweite elastische ringförmige Abdichtelement (12; 122) den Ringspalt (10) schließt, wobei das Abdichtelement (12; 122) zumindest mit seinem Ringaußenbereich (17) in den ersten dem Hülsenendbereich (8) am nächsten liegenden Balgelementfreiraum (21) des an der Nabe (3) des Hülsenendbereiches (8) liegenden Balgfreiraums (20) eingreift.

8. Kupplung nach Anspruch 6 oder 7,
**dadurch gekennzeichnet,**
**dass** das zweite elastische ringförmige Abdichtelement (12; 122) aus elastischem Polyäthylen-Schaum-Material besteht.

9. Kupplung nach Anspruch 1,
**dadurch gekennzeichnet,**
**dass** ein drittes elastisches ringförmiges Abdichtelement (12; 123) den Ringspalt (10) schließt, wobei das Abdichtelement (12; 123) den der Nabe (3) gegenüberliegenden Balgfreiraum (20) des Balges (5) in mehreren oder in allen Balgelementfreiräumen (21) ausfüllt und das mit seinem Ringinnenbereich (18) auf der Nabenaußenfläche (9) in Form eines elastischen Dichtrings (24) kontaktierend aufliegt.

10. Kupplung nach Anspruch 9,
**dadurch gekennzeichnet,**
**dass** das dritte elastische ringförmige Abdichtelement (12; 123) aus elastischem Schaumstoff-Material besteht.

11. Kupplung nach Anspruch 1,
**dadurch gekennzeichnet,**
**dass** ein viertes elastisches ringförmiges Abdichtelement (12; 124) mit miteinander im Ringinnenbereich (18) verbundenen, den Ringaußenbereich (17) darstellenden Ringdichtlippen (23) ausgebildet ist, die die der Nabenaußenfläche (9) gegenüberliegenden Balgelementfreiräume (21) der Balgelemente (25) in mindestens einen, in mehreren oder vorzugsweise in allen Balgelementfreiräumen (21) ausfüllen, wobei das Abdichtelement (12; 124) mit seinem Ringinnenbereich (18) von der Nabenaußenfläche (9) im Abstand angeordnet ist und wobei die belegten Balgelementfreiräume (21) abgedichtet und damit die Balgelementfreiräume (21) geschützt sind.

12. Kupplung nach Anspruch 11,
**dadurch gekennzeichnet,**
**dass** das vierte elastische ringförmige Abdichtelement (12; 124) aus elastischem Schaumstoff-Material besteht.

13. Kupplung nach mindestens einem der vorhergehenden Ansprüche,
**dadurch gekennzeichnet,**
**dass** das in die Balgelementfreiräume (21) eingefügte elastische Material der Abdichtelemente (12; 121, 122, 123, 124) fest an der Innenfläche der Balgelementfreiräume (21) haftet oder in die Balgelementfreiräume (21) geklemmt ist.

14. Kupplung nach den Ansprüchen 1 bis 13,
**dadurch gekennzeichnet,**
**dass** die Abdichtelemente (12; 121, 122, 123, 124) derart ausgebildet und hergestellt sind, dass der Ringaußenbereich (17) und der Ringinnenbereich (18) voneinander getrennt hergestellte Bereichsteile sind oder der Ringaußenbereich (17) und auch der Ringinnenbereich (18) zumindest aus mindestens zwei Bereichsteilen bestehen, die zu einem Abdichtelement (12; 121, 122, 123, 124) miteinander zusammengefügt sind.

15. Kupplung nach den Ansprüchen 1 bis 13,
**dadurch gekennzeichnet,**
**dass** der Ringaußenbereich (17) und der Ringinnenbereich (18) Teile jeweils eines einstückig hergestellten Abdichtelements (12; 121, 122, 123, 124) sind.

16. Kupplung nach den Ansprüchen 1 bis 15,
**dadurch gekennzeichnet,**
**dass** das elastische ringförmige Abdichtelement (12) zu einem Kombinationsabdichtelement ausgebildet ist, wobei zumindest zwei der Abdichtelemente (121, 122, 123, 124) elementmäßig zusammengefasst sind.

## Claims

1. Coupling (1) having a gaiter-protected positively locking driving connection (2),
at least comprising a hub (3) and a sleeve (4),
the driving connection (2) being arranged between the hub (3) and the sleeve (4), the driving connection (2) being protected by way of a gaiter (5), the gaiter (5) being situated in a recess (6) of the hub (3), and being fastened on one side to the sleeve end region (8) and being fastened on the other side, lying opposite the sleeve end region (8), to the hub (3),
the annular recess (16) being delimited at least by an annular hub inner face (6) which is directed towards the driving connection (2), and by an opposite hub outer face (9) which is configured towards the end side (11) of the hub (3), there being an annular gap (10) between the sleeve end region (8) and the hub outer face (9) of the recess (6),
**characterized**
**in that** at least one elastic annular sealing element (12; 121, 122, 123, 124) is arranged in the region between the annular gaiter (5) of corrugated configuration with gaiter elements (25) and the hub outer face (9), the sealing element (12) sealing at least one gaiter element clearance (21) of a gaiter element (25), which gaiter element clearance (21) is adjacent with respect to the annular gap (10) and is configured in cross section as a corrugation trough.

2. Coupling according to Claim 1,
**characterized**
**in that** the coupling (1) with a gaiter-protected positively locking driving connection (2) constitutes a tooth coupling with at least one crowned toothing system with a gaiter seal.

3. Coupling according to Claim 1,
**characterized**
**in that** a first elastic annular sealing element (12; 121) is fastened by way of an annular outer region (17) of adapted shape and by way of an annular inner region (18) of adapted shape to the sleeve end region (8) with the integration of the gaiter holder (13) by means of two elongate annular lips (14, 15) which partially enclose the end (7) of the sleeve end region (8) annular outer region (17), and has an outwardly directed and inclined elastic sealing lip (19) in the annular inner region (18), which sealing lip (19) lies elastically and sealingly on the hub outer face (9) and closes the annular gap (10) by way of its contact in accordance with the sealing lip on the hub outer face (9) .

4. Coupling according to Claim 3,
**characterized**
**in that** the first elastic sealing element (12; 121) is situated at least in one, in particular in the first gaiter element clearance (21), as an annular outer region (17), the first inner annular lip (14), configured as an annular lip (23) which is adapted partially or completely to the gaiter element clearance (21) of a gaiter element (25), having the elastic sealing lip (19) which is directed towards the end side (11) of the hub (3) as an annular inner region (18).

5. Coupling according to Claims 3 and 4,
**characterized**
**in that** the first elastic annular sealing element (12; 121) consists of elastic material in the form of an elastomer such as PUR plastic or rubber.

6. Coupling according to Claim 1,
**characterized**
**in that** a second elastic annular sealing element (12; 122) closes the annular gap (10), which second elastic annular sealing element (12; 122) engages at least with its annular outer region (17) into at least one of the gaiter element clearances (21) of the gaiter clearance (20) which lies in the hub (3) of the sleeve end region (8), the annular inner region (18) of the sealing element (12; 122) bearing in the form of an elastic sealing ring (24) or in the form of an elastic sealing lip (19) on the hub outer face (9) of the recess (6) in a contacting manner.

7. Coupling according to Claim 6,
**characterized**
**in that** the second elastic annular sealing element (12; 122) closes the annular gap (10), the sealing element (12; 122) engaging at least with its annular outer region (17) into the first gaiter element clearance (21), which lies closest to the sleeve end region (8), of the gaiter clearance (20) which lies on the hub (3) of the sleeve end region (8).

8. Coupling according to Claim 6 or 7,
**characterized**
**in that** the second elastic annular sealing element (12; 122) consists of elastic polyethylene foam material.

9. Coupling according to Claim 1,
**characterized**
**in that** a third elastic annular sealing element (12; 123) closes the annular gap (10), the sealing element (12; 123) filling that gaiter clearance (20) of the gaiter (5) which lies opposite the hub (3) in a plurality of or in all gaiter element clearances (21), and which sealing element (12; 123) lies with its annular inner region (18) on the hub outer face (9) in the form of an elastic sealing ring (24) in a contacting manner.

10. Coupling according to Claim 9,
**characterized**
**in that** the third elastic annular sealing element (12; 123) consists of elastic foam material.

11. Coupling according to Claim 1,
**characterized**
**in that** a fourth elastic annular sealing element (12; 124) is configured with annular sealing lips (23) which are connected to one another in the annular inner region (18), constitute the annular outer region (17), and fill those gaiter element clearances (21) of the gaiter elements (25) which lie opposite the hub outer face (9) in at least one, in a plurality of or preferably in all gaiter element clearances (21), the sealing element (12; 124) being arranged with its annular inner region (18) at a spacing from the hub outer face (9), and the occupied gaiter element clearances (21) being sealed, and the gaiter element clearances (21) therefore being protected.

12. Coupling according to Claim 11,
**characterized**
**in that** the fourth elastic annular sealing element (12; 124) consists of elastic foam material.

13. Coupling according to at least one of the preceding claims,
**characterized**
**in that** that elastic material of the sealing elements (12; 121, 122, 123, 124) which is inserted into the gaiter element clearances (21) adheres fixedly on the inner face of the gaiter element clearances (21) or is clamped into the gaiter element clearances (21).

14. Coupling according to Claims 1 to 13,
**characterized**
**in that** the sealing elements (12; 121, 122, 123, 124) are configured and produced in such a way that the annular outer region (17) and the annular inner region (18) are region parts which are produced separately from one another, or the annular outer region (17) and also the annular inner region (18) consist at least of at least two region parts which are joined together to one another to form a sealing element (12; 121, 122, 123, 124).

15. Coupling according to Claims 1 to 13,
**characterized**
**in that** the annular outer region (17) and the annular inner region (18) are parts of in each case one sealing element (12; 121, 122, 123, 124) which is produced in one piece.

16. Coupling according to Claims 1 to 15,
**characterized**
**in that** the elastic annular sealing element (12) is configured to form a combination sealing element, at least two of the sealing elements (121, 122, 123, 124) being combined in element terms.

## Revendications

1. Accouplement (1) muni d'un élément de liaison d'entraînement à complémentarité de forme (2) protégé par un soufflet, comprenant au moins un moyeu (3) et une douille (4),
dans lequel l'élément de liaison d'entraînement (2) est disposé entre le moyeu (3) et la douille (4), dans lequel l'élément de liaison d'entraînement (2) est protégé par un soufflet (5), dans lequel le soufflet (5) se trouve dans un évidement (6) du moyeu (3) et est fixé d'une part à la région d'extrémité de douille (8) et d'autre part au moyeu (3) à l'opposé de la région d'extrémité de douille (8),
dans lequel l'évidement annulaire (6) est limité au moins par une face intérieure de moyeu (16) annulaire orientée vers l'élément de liaison d'entraînement (2) et par une face extérieure de moyeu (9) opposée formée vers le côté frontal (11) du moyeu (3), dans lequel il se trouve une fente annulaire (10) entre la région d'extrémité de douille (8) et la face extérieure de moyeu (9) de l'évidement (6),
**caractérisé en ce qu'**au moins un élément d'étanchéité annulaire élastique (12; 121, 122, 123, 124) est disposé dans la région comprise entre le soufflet annulaire de forme ondulée (5) avec des éléments de soufflet (25) et la face extérieure de moyeu (9), dans lequel l'élément d'étanchéité (12) assure l'étanchéité d'au moins un espace libre d'élément de soufflet (21) d'un élément de soufflet (25), voisin de la fente annulaire (10) et réalisé en section transversale sous la forme d'une vallée d'onde.

2. Accouplement selon la revendication 1, **caractérisé en ce que** l'accouplement (1) muni d'un élément de liaison d'entraînement à complémentarité de forme (2) protégé par un soufflet représente un accouplement denté avec au moins une denture sphérique avec étanchéité à soufflet.

3. Accouplement selon la revendication 1, **caractérisé en ce qu'**un premier élément d'étanchéité annulaire élastique (12; 121) avec une région extérieure annulaire de forme adaptée (17) et avec une région intérieure annulaire de forme adaptée (18) est fixé à la région d'extrémité de douille (8) avec liaison du support de soufflet (13) au moyen de deux régions extérieures annulaires (17) de lèvres annulaires allongées (14, 15) entourant partiellement l'extrémité (7) de la région d'extrémité de douille (8) et comporte dans la région intérieure annulaire (18) une lèvre d'étanchéité élastique inclinée et orientée vers l'extérieur (19), qui s'applique de façon élastique et étanche sur la face extérieure de moyeu (9) et ferme la fente annulaire (10) par son application par les lèvres d'étanchéité sur la face extérieure de moyeu (9).

4. Accouplement selon la revendication 3, **caractérisé en ce que** le premier élément d'étanchéité élastique (12; 121) se trouve au moins sous forme de région extérieure annulaire (17), en particulier dans le premier espace libre d'élément de soufflet (21), dans lequel la première lèvre annulaire placée intérieurement (14), réalisée sous forme de lèvre annulaire (23), est partiellement ou entièrement adaptée à l'espace libre d'élément de soufflet (21) d'un élément de soufflet (25), et présente sous forme de région intérieure annulaire (18) la lèvre d'étanchéité élastique (19) orientée vers le côté frontal (11) du moyeu (3).

5. Accouplement selon les revendications 3 et 4, **caractérisé en ce que** le premier élément d'étanchéité annulaire élastique (12; 121) se compose d'un matériau élastique sous la forme d'un élastomère comme une matière plastique PUR ou du caoutchouc.

6. Accouplement selon la revendication 1, **caractérisé en ce qu'**un deuxième élément d'étanchéité annulaire élastique (12; 122) ferme la fente annulaire (10) et s'engage au moins avec sa région extérieure annulaire (17) dans au moins un des espace libres d'élément de soufflet (21) de l'espace libre de soufflet (20) situé dans le moyeu (3) de la région d'extrémité de douille (8), dans lequel la région intérieure annulaire (18) de l'élément d'étanchéité (12; 122) s'applique par contact sous la forme d'un anneau d'étanchéité élastique (24) ou sous la forme d'une lèvre d'étanchéité élastique (19) sur la face extérieure de moyeu (9) de l'évidement (6) .

7. Accouplement selon la revendication 6, **caractérisé en ce que** le deuxième élément d'étanchéité annulaire élastique (12; 122) ferme la fente annulaire (10), dans lequel l'élément d'étanchéité (12; 122) s'engage au moins avec sa région extérieure annulaire (17) dans le premier espace libre d'élément de soufflet (21), situé le plus près de la région d'extrémité de douille (8), de l'espace libre de soufflet (20) situé sur le moyeu (3) de la région d'extrémité de douille (8).

8. Accouplement selon la revendication 6 ou 7, **caractérisé en ce que** le deuxième élément d'étanchéité annulaire élastique (12; 122) se compose de matériau de mousse de polyéthylène élastique.

9. Accouplement selon la revendication 1, **caractérisé en ce qu'**un troisième élément d'étanchéité annulaire élastique (12; 123) ferme la fente annulaire (10), dans lequel l'élément d'étanchéité (12; 123) remplit l'espace libre de soufflet (20) du soufflet (5) opposé au moyeu (3) dans plusieurs ou dans tous les espaces libres de soufflet (21), et il s'applique par contact avec sa région intérieure annulaire (18) sur la face extérieure de moyeu (9) sous la forme d'un anneau d'étanchéité élastique (24).

10. Accouplement selon la revendication 9, **caractérisé en ce que** le troisième élément d'étanchéité annulaire élastique (12; 123) se compose de matériau de mousse élastique.

11. Accouplement selon la revendication 1, **caractérisé en ce qu'**un quatrième élément d'étanchéité annulaire élastique (12; 124) est réalisé avec des lèvres d'étanchéité annulaires (23) reliées l'une à l'autre dans la région intérieure annulaire (18) et représentant la région extérieure annulaire (17), qui remplissent les espaces libres d'élément de soufflet (21) des éléments de soufflet (25) opposés à la face extérieure de moyeu (9) dans au moins un, dans plusieurs ou de préférence dans tous les espaces libres d'élément de soufflet (21), dans lequel l'élément d'étanchéité (12; 124) est disposé avec sa région intérieure annulaire (18) à distance de la face extérieure de moyeu (9) et dans lequel les espaces libres d'élément de soufflet occupés (21) sont étanches et de ce fait les espaces libres d'élément de soufflet (21) sont protégés.

12. Accouplement selon la revendication 11, **caractérisé en ce que** le quatrième élément d'étanchéité annulaire élastique (12; 124) se compose d'un matériau de mousse élastique.

13. Accouplement selon au moins une des revendications précédentes, **caractérisé en ce que** le matériau élastique des éléments d'étanchéité (12; 121, 122, 123, 124) inséré dans les espaces libres d'élément de soufflet (21) adhère fortement à la face intérieure des espaces libres d'élément de soufflet (21) ou est collé dans les espaces libres d'élément de soufflet (21).

14. Accouplement selon les revendications 1 à 13, **caractérisé en ce que** les éléments d'étanchéité (12; 121, 122, 123, 124) sont configurés et fabriqués de telle manière que la région extérieure annulaire (17) et la région intérieure annulaire (18) soient des parties de région fabriquées séparément l'une de l'autre ou que la région extérieure annulaire (17) et aussi la région intérieure annulaire (18) se composent au moins d'au moins deux parties de région, qui sont assemblées l'une à l'autre pour former un élément d'étanchéité (12; 121, 122, 123, 124).

15. Accouplement selon les revendications 1 à 13, **caractérisé en ce que** la région extérieure annulaire (17) et la région intérieure annulaire (18) sont respectivement des parties d'un élément d'étanchéité fabriqué en une seule pièce (12; 121, 122, 123, 124).

16. Accouplement selon les revendications 1 à 15, **caractérisé en ce que** l'élément d'étanchéité annulaire élastique (12) est réalisé sous la forme d'un élément d'étanchéité combiné, dans lequel au moins deux des éléments d'étanchéité (121, 122, 123, 124) sont assemblés par éléments.
